# EUROPEAN PATENT APPLICATION

(11) **EP 4 411 860 A1**
(43) Date of publication of application: **07.08.2024**
(21) Application number: 23810744.5
(22) Date of filing: 26.04.2023
(51) Int. Cl.: H01M 4/13

(54) **NEGATIVE ELECTRODE SHEET, ELECTRODE ASSEMBLY, BATTERY CELL, BATTERY AND ELECTRICAL DEVICE**

(30) Priority: 21.05.2022 CN 202210558210
(71) Applicant: Contemporary Amperex Technology Co., Limited, Ningde, Fujian 352100 (CN)
(72) Inventor: CHEN, Xingbu, Ningde, Fujian 352100 (CN); WU, Lili, Ningde, Fujian 352100 (CN); SUN, Xin, Ningde, Fujian 352100 (CN); LI, Xuan, Ningde, Fujian 352100 (CN); DONG, Miaomiao, Ningde, Fujian 352100 (CN); SONG, Peidong, Ningde, Fujian 352100 (CN); YUN, Liang, Ningde, Fujian 352100 (CN)
(74) Representative: Rowlands, Stuart Michael
(86) International application number: PCT/CN2023/090809
(87) International publication number: WO 2023/226671

(57) **Abstract**

Disclosed in embodiments of the present application are a negative electrode sheet, an electrode assembly, a battery cell, a battery and an electrical device. The negative electrode sheet comprises a negative electrode current collector and a negative electrode active material layer disposed on the negative electrode current collector, wherein the negative electrode active material layer is provided with a plurality of channels. According to the technical solution of the present application, the phenomenon of lithium plating on the surface layer of the negative electrode sheet can be reduced, and thus, the possibility that lithium dendrites grow and pierce a separator is reduced, thereby improving the reliability of a battery.

## Description

### CROSS-REFERENCE TO RELATED APPLICATIONS

This application claims priority to Chinese Patent Application No. 202210558210.7, filed on May 21, 2022 and entitled "NEGATIVE ELECTRODE PLATE, ELECTRODE ASSEMBLY, BATTERY, AND ELECTRICAL DEVICE", which is incorporated herein by reference in its entirety.

### TECHNICAL FIELD

This application relates to the technical field of batteries, and in particular, to an electrode plate, an electrode assembly, a battery cell, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

In the development of battery technology, the requirement on battery performance is rising increasingly higher. Lithium plating is one of the important factors affecting battery performance. Therefore, how to reduce the possibility of lithium plating of the battery is a pressing technical challenge in the battery technology.

### SUMMARY

Some embodiments of this application provide a negative electrode plate, an electrode assembly, a battery cell, a battery, and an electrical device to reduce lithium plating on a surface of the negative electrode plate, and reduce the possibility of lithium dendrites growing and piercing the separator, and in turn, enhance reliability of the battery.

According to a first aspect, a negative electrode plate is provided, including: a negative current collector and a negative active material layer disposed on the negative current collector. A plurality of pore channels are disposed in the negative active material layer.

In an embodiment of this application, a plurality of pore channels are disposed in the negative active material layer on the negative current collector. During charging of the battery, the lithium ions in the positive electrode plate migrate to the negative electrode plate and are deposited in the pore channels. In this way, the lithium ions transferred from the positive electrode plate to the negative electrode plate are prevented from accumulating on the surface of the negative electrode plate in large quantities, thereby reducing lithium plating on the surface of the negative electrode plate, reducing the possibility of lithium dendrites growing and piercing the separator, and in turn, enhancing the reliability of the battery.

In some embodiments, the plurality of pore channels are evenly distributed in the negative active material layer.

The even distribution of the pore channels in the negative active material layer ensures that the overall structure of the negative active material layer is flat and even. In supporting the separator, the force is spread evenly in different parts, thereby supporting the separator more effectively, enabling the separator to effectively isolate the positive electrode plate from the negative electrode plate, reducing the possibility of a short circuit of the battery, and in turn, improving the reliability of the battery.

In some embodiments, a width W of each of the pore channels is 40 µm to 1000 µm.

When the width W of the pore channel is unduly small, the probability of lithium ions depositing into the pore channel is very low, and it is difficult for the lithium ions to deposit in the pore channel. Therefore, the width of the pore channel is set to be not less than 40 µm. When the width W of the pore channel is unduly large, the surface of the negative electrode plate is very uneven, and the force is unevenly spread in different parts of the separator in supporting the separator, thereby being prone to damage the separator, and making the separator unable to effectively isolate the positive electrode plate from the negative electrode plate. Therefore, the width W of the pore channel is set to be not greater than 1000 µm.

In some embodiments, the width W of the pore channel is 100 µm to 300 µm. When the width of the pore channel falls within the range specified above, lithium ions can be preferentially deposited in the pore channels without affecting the evenness of the negative electrode plate, thereby effectively alleviating lithium plating on the surface of the negative electrode plate.

In some embodiments, a spacing L between adjacent pore channels is 40 µm to 500 µm. This can avoid the unevenness of the negative active material layer caused by dense pore channels, and ensure that the negative active material layer provides sufficient pore channels in which the lithium ions can be deposited, thereby effectively alleviating lithium plating on the surface of the negative electrode plate.

In some embodiments, the pore channels include first channels extending along a first direction and second channels extending along a second direction. A plurality of first channels and a plurality of second channels form a lattice structure. The second direction is perpendicular to the first direction.

On the one hand, the lattice-structured pore channels provide enough space in which the lithium ions can be deposited. On the other hand, the lattice-structured space is of high rigidity and stability, and endows the negative electrode plate with sufficient structural strength to support the separator, thereby enabling the separator to effectively isolate the positive electrode plate from the negative electrode plate, reducing the possibility of a short circuit of the battery, and in turn, improving the reliability of the battery.

In some embodiments, each of the pore channels is a channel extending along a first direction. A plurality of the channels are arranged along a second direction to form a striped structure. The second direction is perpendicular to the first direction. This structure not only ensures the evenness of the negative active material layer, but also provides as many pore channels as possible in which the lithium ions can be deposited, thereby effectively alleviating lithium plating on the surface of the negative electrode plate.

In some embodiments, the pore channels are holes, and a plurality of the holes form a hole array structure. This structure not only ensures the evenness of the negative active material layer, but also provides as many pore channels as possible in which the lithium ions can be deposited, thereby effectively alleviating lithium plating on the surface of the negative electrode plate.

In some embodiments, the pore channels are formed by a laser scribing process.

Laser scribing can reduce eddy-current losses. The laser scribing process is a contactless process, and is of very high reliability and controllability.

In some embodiments, the negative active material layer includes a negative active material. A volume of the negative active material is less than a volume of a positive active material in a positive electrode plate corresponding to the negative electrode plate.

By reducing the volume of the negative active material, the weight of the negative electrode plate is reduced, and the gravimetric energy density of the battery is increased.

In some embodiments, the volume of the negative active material is less than 80% of the volume of the positive active material, thereby further increasing the gravimetric energy density of the battery.

In some embodiments, the volume of the negative active material in a first region not provided with the pore channels in the negative active material layer is greater than the volume of the positive active material in a region corresponding to the first region in the positive electrode plate.

This ensures that the negative active material in the first region can provide enough vacancies in which the lithium ions can be deposited, thereby reducing lithium plating on the surface of the negative electrode plate.

In some embodiments, the volume of the negative active material in each of the pore channels is less than the volume of the positive active material in a region corresponding to the pore channel in the positive electrode plate. This can reduce the overall weight of the negative electrode plate, and increase the gravimetric energy density of the battery.

In some embodiments, the volume of the negative active material in each of the pore channels is less than 60% of the volume of the positive active material in the region corresponding to the pore channel in the positive electrode plate, thereby increasing the gravimetric energy density of the battery.

According to a second aspect, an electrode assembly is provided. The electrode assembly includes: the negative electrode plate according to the first aspect or any possible implementation of the first aspect; a positive electrode plate, including a positive current collector and a positive active material disposed on the positive current collector; and a separator, disposed between the negative electrode plate and the positive electrode plate.

According to a third aspect, a battery cell is provided. The battery cell includes the electrode assembly according to the second aspect or any possible implementation of the second aspect.

According to a fourth aspect, a battery is provided. The battery includes the battery cell according to the third aspect or any possible implementation of the third aspect.

According to a fifth aspect, an electrical device is provided. The electrical device includes the battery according to the fourth aspect or any possible implementation of the fourth aspect. The battery is configured to provide electrical energy.

In the technical solution in an embodiment of this application, a plurality of pore channels are disposed in the negative active material layer on the negative current collector. During charging of the battery, the lithium ions in the positive electrode plate migrate to the negative electrode plate and are deposited in the pore channels. In this way, the lithium ions transferred from the positive electrode plate to the negative electrode plate are prevented from accumulating on the surface of the negative electrode plate in large quantities, thereby reducing lithium plating on the surface of the negative electrode plate, reducing the possibility of lithium dendrites growing and piercing the separator, and in turn, enhancing the reliability of the battery.

### BRIEF DESCRIPTION OF DRAWINGS

To describe the technical solutions of some embodiments of this application more clearly, the following outlines the drawings used in the embodiments of this application. As will be apparent, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a top view of a negative electrode plate according to some embodiments of this application;
FIG. 5 is a side view of the negative electrode plate shown in FIG. 4;
FIG. 6 is a top view of a negative electrode plate according to some embodiments of this application;
FIG. 7 is a top view of a negative electrode plate according to some embodiments of this application;
FIG. 8 is a top view of a negative electrode plate according to some embodiments of this application; and
FIG. 9 is a schematic structural diagram of an electrode assembly according to some embodiments of this application.

The drawings are not drawn to scale.

### DETAILED DESCRIPTION OF EMBODIMENTS

The following describes technical solutions of embodiments in this application with reference to accompanying drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In this application, a battery means a physical module that includes one or more battery cells to provide electrical energy. For example, the battery mentioned in this application may include a battery module, a battery pack, or the like. A battery typically includes a box configured to package one or more battery cells. The box prevents liquid or other foreign matters from affecting the charging or discharging of the battery cells.

In some embodiments, a battery cell may include types such as a lithium-ion secondary battery, a lithium-ion primary battery, a lithium-sulfur battery, a sodium-lithium-ion battery, a sodium-ion battery, or a magnesium-ion battery. The type of the battery cell is not limited herein. Typically, a battery cell is briefly referred to as a cell. The battery cell may be in the shape of a cylinder, a flat body, a cuboid, or another regular or irregular shape. The technical solution disclosed in an embodiment of this application is applicable to battery cells of any shape.

A battery cell includes an electrode assembly and an electrolytic solution. The electrode assembly includes a positive electrode plate, a negative electrode plate, and a separator. The battery cell works primarily by relying on transfer of metal ions between the positive electrode plate and the negative electrode plate. The positive electrode plate includes a positive current collector and a positive active material layer. A surface of the positive current collector is coated with the positive active material layer. A part of the current collector that is not coated with the positive active material layer protrudes from a part coated with the positive active material layer, and the part that is not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. A part of the current collector that is not coated with the negative active material layer protrudes from a part that is coated with the negative active material layer, and the part that is not coated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as polypropylene (Polypropylene, PP) or polyethylene (Polyethylene, PE). In addition, the electrode assembly may be of a j elly-roll type structure or a stacked type structure, without being limited herein.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the increase of the application fields of the power batteries.

In the development of battery technology, the requirement on battery performance is increasingly higher. Lithium plating is one of the important factors affecting battery performance. For example, during the charging and discharging of a battery, the negative electrode plate in the electrode assembly may incur lithium plating on the surface. In severe cases, lithium dendrites may grow and pierce the separator, making the battery be at risk of a short circuit, and posing safety hazards to the battery.

In view of the problems above, this application provides a negative electrode plate. The negative electrode plate includes: a negative current collector and a negative active material layer disposed on the negative current collector. A plurality of pore channels are disposed in the negative active material layer. During charging of the battery, the lithium ions in a positive active material in a positive electrode plate are transferred to a negative electrode plate and are deposited in the pore channels. In this way, the lithium ions transferred from the positive electrode plate to the negative electrode plate are prevented from accumulating on the surface of the negative electrode plate in large quantities, thereby reducing lithium plating on the surface of the negative electrode plate, reducing the possibility of lithium dendrites growing and piercing the separator, and in turn, enhancing the reliability of the battery.

The battery cell disclosed in embodiments of this application is applicable to, but not limited to use in, electrical devices such as a vehicle, watercraft, or aircraft. A power supply system of the electrical devices may be formed by using the battery cell, the battery, and the like disclosed in this application, so as to improve the reliability and safety of the battery.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1 is used as an example of the electrical device according to an embodiment of this application.

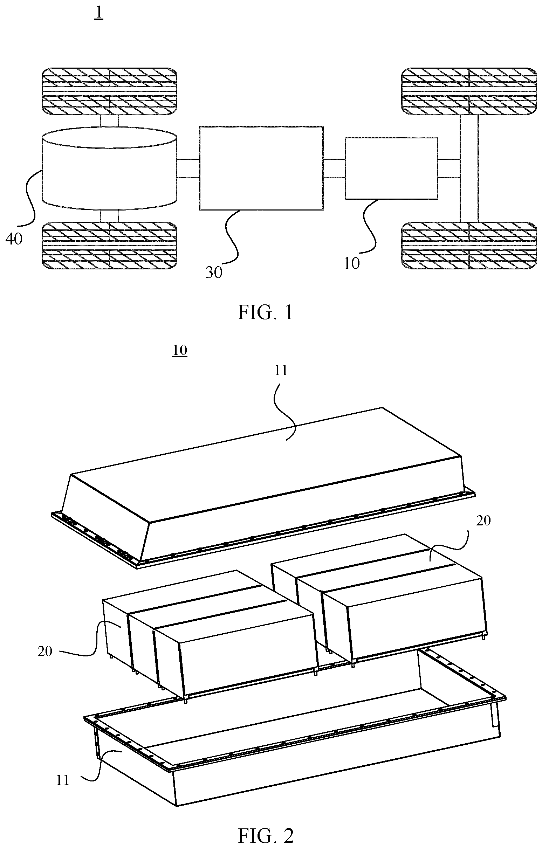

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery 10 may include a plurality of battery cells. For example, as shown in FIG. 2, which is a schematic structural diagram of a battery 10 according to an embodiment of this application, the battery 10 may include a plurality of battery cells 20. The battery 10 may further include a box 11. The interior of the box 11 is a hollow structure. A plurality of battery cells 20 are accommodated in the box 11. For example, the plurality of battery cells 20 are combined and connected in parallel, series, or series-and-parallel pattern, and then placed into the box 11.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box. Optionally, the conductive mechanism may also belong to the busbar component.

Depending on different power requirements, the number of battery cells 20 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required. The battery may include a plurality of battery modules. The battery modules may be connected in series, parallel, or series-and-parallel pattern.

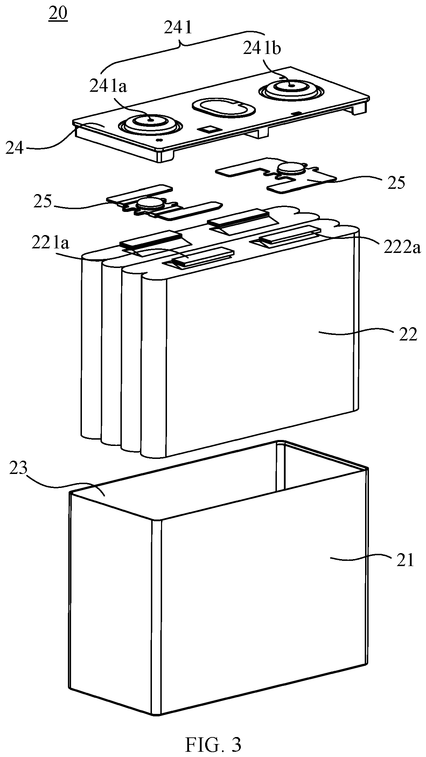

As shown in FIG. 3, which is a schematic structural diagram of a battery cell 20 according to an embodiment of this application, the battery cell 20 includes one or more electrode assemblies 22, a housing 21, and an end cap 24. The housing 21 and the end cap 24 form a shell or a battery case. Both the wall of the housing 21 and the end cap 24 are referred to as walls of the battery cell 20. For a cuboidal battery cell 20, the walls of the housing 21 include a bottom wall and four sidewalls. The bottom wall and the four sidewalls are connected to form an accommodation space 23 for holding the electrode assembly 22. The shape of the housing 21 is determined depending on the shape of a combination of one or more electrode assemblies 22. For example, the housing 21 may be a hollow cuboid or cube or cylinder. One surface of the housing 21 is provided with an opening through which one or more electrode assemblies 22 can be placed into the housing 21 conveniently. For example, when the housing 21 is a hollow cuboid or cube, one of faces of the housing 21 is an open face. The open face is not walled so that the inside of the housing 21 communicates with the outside. When the housing 21 is a hollow cylinder, an end face of the housing 21 may be an open face. That is, this end face is not walled so that the inside of the housing 21 communicates with the outside. The end cap 24 covers the opening of the accommodation space 23 and is connected to the housing 21 to form a closed cavity that is configured to accommodate the electrode assembly 22. The housing 21 is filled with an electrolyte such as an electrolytic solution.

The battery cell 20 may further include two electrode terminals 241. The two electrode terminals 241 may be disposed on the end cap 24. The end cap 24 is generally in the shape of a flat plate. Two electrode terminals 241 are fixed onto a flat surface of the end cap 24. The two electrode terminals 241 are a positive electrode terminal 241a and a negative electrode terminal 241b respectively. A connecting member 25, also referred to as a current collection component 25, is disposed corresponding to each electrode terminal 241, located between the end cap 24 and the electrode assembly 22, and configured to electrically connect the electrode assembly 22 and the electrode terminal 241.

As shown in FIG. 3, each electrode assembly 22 includes a first tab 221a and a second tab 222a. The polarity of the first tab 221a is opposite to the polarity of the second tab 222a. For example, when the first tab 221a is a positive tab, the second tab 222a is a negative tab. The first tabs 221a of one or more electrode assemblies 22 are connected to one electrode terminal by one connecting member 25. The second tabs 222a of one or more electrode assemblies 22 are connected to another electrode terminal by another connecting member 25. For example, the positive electrode terminal 241a is connected to the positive tab by one connection component 25, and the negative electrode terminal 241b is connected to the negative tab by another connection component 25.

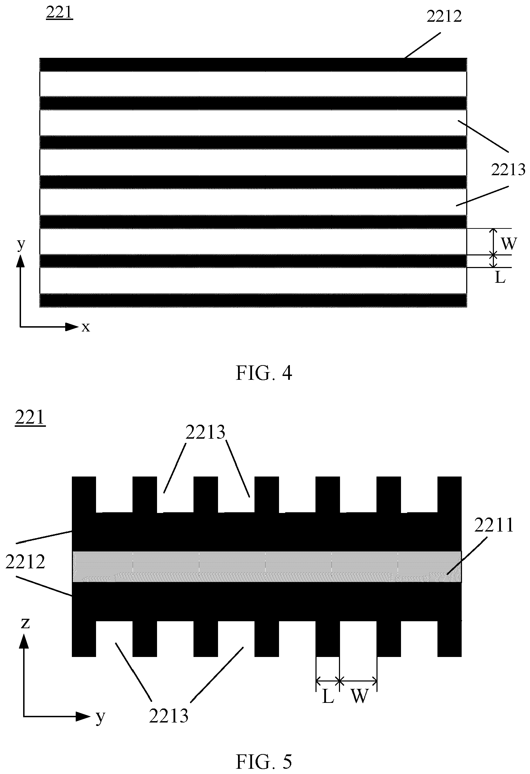

In the battery cell 20, one or more electrode assemblies 22 may be disposed depending on actual use requirements. As shown in FIG. 3, 4 independent electrode assemblies 22 are disposed in the battery cell 20.

FIG. 4 is a top view of a negative electrode plate 221 according to some embodiments of this application. FIG. 5 is a side view of the negative electrode plate 221 shown in FIG. 4. Referring to FIG. 4 and FIG. 5, the negative electrode plate 221 includes a negative current collector 2211 and a negative active material layer 2212 disposed on the negative current collector 2211. A plurality of pore channels 2213 are disposed in the negative active material layer 2212.

The negative electrode plate 221 is a high-potential electrode plate that contains an active material reacting reductively during discharge. The negative electrode plate 221 includes a negative current collector 2211 and a negative active material layer 2212 disposed on the negative current collector 2211. The negative active material layer 2212 may include a carbonaceous material, such as graphite, soft carbon (such as coke), and hard carbon, and may include a non-carbon material such as nitride, PAS, tin-based oxide, tin alloy, or nano negative electrode material, other intermetallic compounds, and the like. The negative current collector 2211 collects the current generated by the negative active material in the negative active material layer 2212, so as to form a larger current for output to an external device. Therefore, the negative current collector 2211 needs to be in full contact with the negative active material, and the internal resistance needs to be minimized.

A plurality of pore channels 2213 are further disposed in the negative active material layer 2212 in an embodiment of this application. The openings of the pore channels 2213 face a surface, away from the negative current collector 2211, of the negative active material layer 2212 so that the lithium ions migrating from the positive electrode plate 222 to the negative electrode plate 221 can be deposited in the pore channels.

In the negative electrode plate 221 in this embodiment of this application, a plurality of pore channels 2213 are disposed in the negative active material layer 2212 on the negative current collector 2211. During charging of the battery 10, the lithium ions in the positive electrode plate 222 migrate to the negative electrode plate 221 and are deposited in the pore channels 2213. In this way, the lithium ions transferred from the positive electrode plate to the negative electrode plate 221 are prevented from accumulating on the surface of the negative electrode plate 221 in large quantities, thereby reducing lithium plating on the surface of the negative electrode plate 221, reducing the possibility of lithium dendrites growing and piercing the separator, and in turn, enhancing the reliability of the battery 10.

In this embodiment of this application, the plurality of pore channels 2213 are evenly distributed in the negative active material layer 2212.

It will be understood that the pore channels 2213 in the negative active material layer 2212 may be randomly distributed according to actual requirements, and the distribution manner is not limited herein.

The even distribution of the pore channels 2213 in the negative active material layer 2212 ensures that the overall structure of the negative active material layer 2212 is stable. In supporting the separator, the force is spread evenly in different parts, thereby supporting the separator more effectively, enabling the separator to effectively isolate the positive electrode plate from the negative electrode plate 221, reducing the possibility of a short circuit of the battery 10, and in turn, improving the reliability of the battery 10.

In this embodiment of this application, as shown in FIG. 4 and FIG. 5, a width W of each of the pore channels 2213 is 40 µm to 1000 µm.

When the width W of the pore channel 2213 is unduly small, the probability of lithium ions depositing into the pore channel 2213 is very low, and it is difficult for the lithium ions to deposit in the pore channel 2213. Therefore, the width W of the pore channel 2213 is set to be not less than 40 µm. When the width W of the pore channel 2213 is unduly large, the surface of the negative electrode plate 221 is very uneven, and the force is unevenly spread in different parts of the separator in supporting the separator, thereby being prone to damage the separator, and making the separator unable to effectively isolate the positive electrode plate from the negative electrode plate 221. Therefore, the width W of the pore channel 2213 is set to be not greater than 1000 µm.

Optionally, in this embodiment of this application, the width W of the pore channel 2213 is 100 µm to 300 µm. When the width of the pore channel falls within the range specified above, lithium ions can be preferentially deposited in the pore channels 2213 without affecting the evenness of the negative electrode plate 221, thereby effectively alleviating lithium plating on the surface of the negative electrode plate 221.

In this embodiment of this application, as shown in FIG. 4 and FIG. 5, a spacing L between adjacent pore channels 2213 is 40 µm to 500 µm. This can avoid the unevenness of the negative active material layer 2212 caused by dense pore channels 2213, and ensure that the negative active material layer 2212 provides sufficient pore channels 2213 in which the lithium ions can be deposited, thereby effectively alleviating lithium plating on the surface of the negative electrode plate 221.

It will be understood that, in this embodiment of this application, the depth of the pore channel 2213 may be designed based on the energy density requirement of the battery 10, as long as the depth does not exceed the depth of the negative active material layer 2212. The depth is not limited herein.

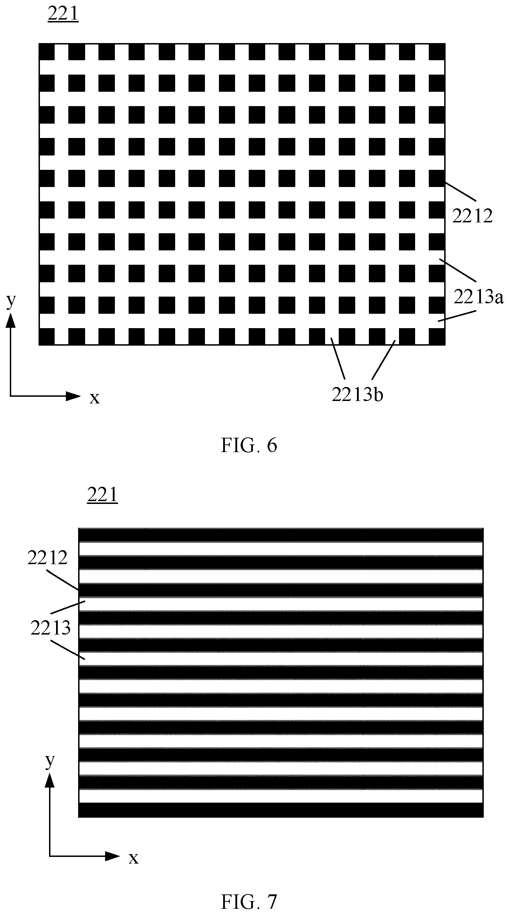

In some embodiments, as shown in FIG. 6, the pore channels 2213 include first channels 2213a extending along a first direction x and second channels 2213b extending along a second direction y. A plurality of first channels 2213a and a plurality of second channels 2213b form a lattice structure. The second direction y is perpendicular to the first direction x.

On the one hand, the lattice-structured pore channels 2213 provide enough space in which the lithium ions can be deposited. On the other hand, the lattice-structured space is of high rigidity and stability, and endows the negative electrode plate 221 with sufficient structural strength to support the separator, thereby enabling the separator to effectively isolate the positive electrode plate from the negative electrode plate 221, reducing the possibility of a short circuit of the battery 10, and in turn, improving the reliability of the battery 10.

In an embodiment of this application, as shown in FIG. 7, each of the pore channels 2213 is a channel extending along a first direction x. A plurality of the channels are arranged along a second direction y to form a striped structure. The second direction y is perpendicular to the first direction x. This structure not only ensures the evenness of the negative active material layer 2212, but also provides as many pore channels 2213 as possible in which the lithium ions can be deposited, thereby effectively alleviating lithium plating on the surface of the negative electrode plate 221.

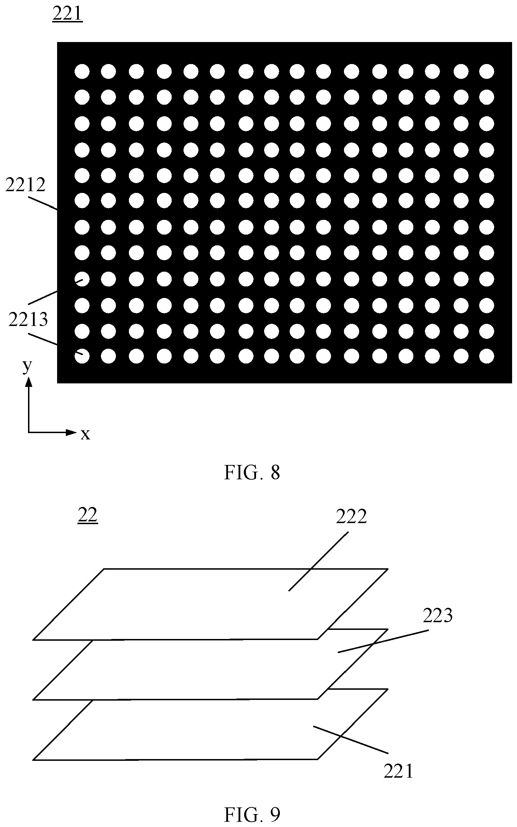

In an embodiment of this application, as shown in FIG. 8, the pore channels 2213 are holes. A plurality of the holes form a hole array structure. This structure not only ensures the evenness of the negative active material layer 2212, but also provides as many pore channels 2213 as possible in which the lithium ions can be deposited, thereby effectively alleviating lithium plating on the surface of the negative electrode plate 221.

The pore channels 2213 in FIG. 4 to FIG. 8 are merely exemplary schematic diagrams of the structure of the pore channels 2213 in some embodiments of this application. The structure of the pore channels 2213 in embodiments of this application is not limited to the examples. Other pore channel structures compliant with the design requirements for the pore channels 2213 in this application are all applicable to this application.

In an embodiment of this application, the pore channels 2213 may be processed and formed by laser scribing, laser perforation, a toothed coating scraper, or by extruding a semi-dry film with a male-female embossing roller, or the like.

It will be understood that the pore channels 2213 in this embodiment of this application may be processed and formed in other ways, and the processing method is not limited herein.

Optionally, in an embodiment of this application, the pore channels 2213 are formed by a laser scribing process.

Laser scribing reduces the eddy current loss of oriented silicon steel by reducing a main magnetic domain width in the oriented silicon steel. This method creates an elastic-plastic deformation region beneath the surface of a steel sheet by using the heat of a laser beam, and reduces the main magnetic domain width in the oriented silicon steel by a compressive stress generated in the elastic-plastic deformation region and a tensile stress generated between the scribed marks, so as to reduce the eddy current loss. This method greatly reduces iron loss, and is highly reliable and controllable due to the contactless processing.

In this embodiment of this application, the negative active material layer 2212 includes a negative active material. A volume of the negative active material is less than a volume of a positive active material in a positive electrode plate corresponding to the negative electrode plate 221.

By reducing the volume of the negative active material, the weight of the negative electrode plate 221 is reduced, and the gravimetric energy density of the battery is increased.

Optionally, in an embodiment of this application, the volume of the negative active material is less than 80% of the volume of the positive active material, thereby further increasing the gravimetric energy density of the battery.

In some embodiments of this application, the volume of the negative active material in a first region not provided with the pore channels 2213 in the negative active material layer 2212 is greater than the volume of the positive active material in a region corresponding to the first region in the positive electrode plate.

This ensures that the negative active material in the first region can provide enough vacancies in which the lithium ions can be deposited, thereby reducing lithium plating on the surface of the negative electrode plate.

In an embodiment of this application, the volume of the negative active material in each of the pore channels 2213 is less than the volume of the positive active material in a region corresponding to the pore channel 2213 in the positive electrode plate. This can reduce the overall weight of the negative electrode plate 221, and increase the gravimetric energy density of the battery.

Optionally, in an embodiment of this application, the volume of the negative active material in each of the pore channels 2213 is less than 60% of the volume of the positive active material in the region corresponding to the pore channel 2213 in the positive electrode plate, thereby further increasing the gravimetric energy density of the battery.

An embodiment of this application further provides an electrode assembly 22. As shown in FIG. 9, the electrode assembly 22 includes: the negative electrode plate 221 disclosed in any one of the preceding embodiments; a positive electrode plate 222; and a separator 223.

The positive electrode plate 222 includes a positive current collector and a positive active material disposed on the positive current collector. The separator 223 is disposed between the negative electrode plate 221 and the positive electrode plate 222.

An embodiment of this application further provides a battery cell 20. The battery cell includes the electrode assembly 22 according to the preceding embodiment.

An embodiment of this application further provides a battery 10. The battery includes the battery cell 20 disclosed in the preceding embodiment.

An embodiment of this application further provides an electrical device. The electrical device includes the battery 10 according to the preceding embodiment. The battery 10 is configured to provide electrical energy. Optionally, the electrical device may be a vehicle 1, watercraft, spacecraft, or the like. The type of the electrical device is not limited herein.

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment.

The battery 10 in some embodiments of this application are subjected to an electrical test, and the test results are shown in Table 1 below.

The test policy of the electrical test is to discharge a fully-charged battery at a high C-rate to form a high polarization overpotential, so that the negative active material starts to participate in a delithiation reaction to output electrical energy at the early stage of discharge, and then a part of the metallic lithium ions are diffused into the negative active material first, and then deintercalated. This discharge policy can reduce the proportion of the lithium metal directly participating in transformation or reactions, and more reactions are based on the lithium intercalation and deintercalation mechanism of the negative active material, thereby reducing the lithium loss rate and improving the Coulombic efficiency in each cycle and the cycle life.

Specifically, the test-piece of the electrical test is a stacked-type battery formed by stacking a single-sided positive electrode plate, a separator, a double-sided negative electrode plate 221, a separator, and a single-sided positive electrode plate sequentially. All the positive electrode plates are the same type of NCM811 positive electrode plate, and all the positive electrode plates are ordinary structures that are coated normally. The main body of the negative active material is graphite. The overall volume ratio between the negative electrode and the positive electrode is equal to 0.6. The negative electrode plate 221 is a conventional negative electrode plate coated with a water-based active material on both sides.

In Embodiment 1, after the negative electrode plate is cold-pressed, the active material layers on both sides of the negative electrode plate are etched by laser etching to form latticed pore channels. The width of each pore channel is 200 µm, and the spacing between the pore channels is 200 µm. By controlling the laser power, the etching depth is adjusted and controlled to be 53% of the thickness of the cold-pressed active material layer, so as to make the overall volume ratio between the negative active material and the positive active material be approximately 0.6. As can be seen from Table 1, in contrast to the comparative embodiment, the average Coulombic efficiency of the stacked-type batteries assembled from the negative electrode plate prepared in Embodiment 1 is significantly increased to 99.7%, and the number of cycles counted when the capacity retention rate fades to 80% is increased by more than 600% from 20 to 150. In addition, the self-discharge rate after the end of the cycling is lowered greatly. The average voltage drop is 0.1 mV/h. The micro-short-circuits caused by lithium dendrite punctures are reduced significantly.

In Embodiment 2, after the negative electrode plate is cold-pressed, the active material layers on both sides of the negative electrode plate are etched by laser etching to form striped pore channels. The width of each pore channel is 200 µm, and the spacing between the pore channels is 200 µm. The etching depth of the pore channels is 80% of the thickness of the cold-pressed active material layer, so as to make the overall volume ratio between the negative active material and the positive active material be approximately 0.6. As can be seen from Table 1, in contrast to the comparative embodiment, the average Coulombic efficiency of the stacked-type batteries assembled from the negative electrode plate prepared in Embodiment 2 is significantly increased to 99.4%, and the number of cycles counted when the capacity retention rate fades to 80% is more than 500% of that in the comparative embodiment, increasing from 20 to 102. In addition, the self-discharge rate after the end of the cycling is lowered greatly. The average voltage drop is 0.2 mV/h. The micro-short-circuits caused by lithium dendrite punctures are reduced significantly.

In Embodiment 3, after the negative electrode plate is cold-pressed, the active material layers on both sides of the negative electrode plate are etched by laser etching to form pore channels in the form of a hole array. The diameter of each hole is 200 µm, and the array spacing is 200 µm. The etching depth of the holes is 80% of the thickness of the cold-pressed active material layer, so as to make the overall volume ratio between the negative active material and the positive active material be approximately 0.6. As can be seen from Table 1, in contrast to the comparative embodiment, the average Coulombic efficiency of the stacked-type batteries assembled from the negative electrode plate prepared in Embodiment 3 is significantly increased to 99.6%, and the number of cycles counted when the capacity retention rate fades to 80% is more than 600% of that in the comparative embodiment, increasing from 20 to 135. In addition, the self-discharge rate after the end of the cycling is lowered greatly. The average voltage drop is 0.15 mV/h. The micro-short-circuits caused by lithium dendrite punctures are reduced significantly.

In Embodiment 4, after the negative electrode plate is cold-pressed, the active material layers on both sides of the negative electrode plate are etched by laser etching to form latticed pore channels. The width of each pore channel is 40 µm, and the spacing between the pore channels is 40 µm. The etching depth of the pore channels is 80% of the thickness of the cold-pressed active material layer, so as to make the overall volume ratio between the negative active material and the positive active material be approximately 0.6. As can be seen from Table 1, in contrast to the comparative embodiment, the average Coulombic efficiency of the stacked-type batteries assembled from the negative electrode plate prepared in Embodiment 4 is increased to a limited degree and reaches just 99.0%, and the number of cycles counted when the capacity retention rate fades to 80% is just a little more than 300% of that in the comparative embodiment, increasing from 20 to 62. In addition, the self-discharge rate after the end of the cycling is reduced to a limited degree. The average voltage drop is 0.34 mV/h. Lithium plating occurs in both the regions not provided with pore channels on the negative electrode plate and the pore channels.

In Embodiment 5, after the negative electrode plate is cold-pressed, the active material layers on both sides of the negative electrode plate are etched by laser etching to form latticed pore channels. The width of each pore channel is 500 µm, and the spacing between the pore channels is 500 µm. The etching depth of the pore channels is 80% of the thickness of the cold-pressed active material layer, so as to make the overall volume ratio between the negative active material and the positive active material be approximately 0.6. As can be seen from Table 1, in contrast to the comparative embodiment, the average Coulombic efficiency of the stacked-type batteries assembled from the negative electrode plate prepared in Embodiment 5 is increased to a limited degree and reaches just 98.9%, and the number of cycles counted when the capacity retention rate fades to 80% is just a little more than 200% of that in the comparative embodiment, increasing from 20 to 51. However, the self-discharge rate after the end of the cycling is significantly reduced, and the average voltage drop is 0.29 mV/h. That is because the pore channels are relatively wide, and lithium may be all deposited in the pore channels, thereby effectively preventing the lithium dendrites from piercing the separator, and alleviating the self-discharge significantly. However, during discharge, the path of active material diffusion and lithiation from the lithium plating layer to the region not provided with the pore channels on the negative electrode plate is relatively long. Therefore, a part of the lithium plating layer directly participates in the transformation and reactions, and the lithium depletion speed is relatively high. Therefore, the improvement in terms of the Coulombic efficiency and number of cycles is limited.

In Embodiment 6, after the negative electrode plate is cold-pressed, the active material layers on both sides of the negative electrode plate are etched by laser etching to form latticed pore channels. The width of each pore channel is 1000 µm, and the spacing between the pore channels is 1000 µm. The etching depth of the pore channels is 80% of the thickness of the cold-pressed active material layer, so as to make the overall volume ratio between the negative active material and the positive active material be approximately 0.6. In contrast to the comparative embodiment, the average Coulombic efficiency is increased to a limited degree and reaches just 98.6%, and the number of cycles counted when the capacity retention rate fades to 80% is just 200% of that in the comparative embodiment, increasing from 20 to 40. In addition, the self-discharge rate after the end of the cycling is reduced to a limited degree, and the average voltage drop is 0.43 mV/h. That is because the pore channels are wider, and the path of active material diffusion and lithiation from the lithium plating layer to the region not provided with the pore channels on the negative electrode plate is longer. Therefore, more lithium in the lithium plating layer directly participates in the transformation and reactions, and the lithium depletion speed is relatively high. Therefore, the improvement in terms of the Coulombic efficiency and number of cycles is more limited.

In Embodiment 7, after the negative electrode plate is cold-pressed, the active material layers on both sides of the negative electrode plate are etched by laser etching to form latticed pore channels. The width of each pore channel is 1200 µm, and the spacing between the pore channels is 1200 µm. The etching depth of the pore channels is 80% of the thickness of the cold-pressed active material layer, so as to make the overall volume ratio between the negative active material and the positive active material be approximately 0.6. In contrast to the comparative embodiment, the average Coulombic efficiency is increased to a limited degree and reaches just 98.4%, and the number of cycles counted when the capacity retention rate fades to 80% is less than 200% of that in the comparative embodiment, increasing from 20 to 33. In addition, the self-discharge rate after the end of the cycling is reduced to a limited degree, and the average voltage drop is 0.48 mV/h. That is because the pore channels are wider, and the path of active material diffusion and lithiation from the lithium plating layer to the region not provided with the pore channels on the negative electrode plate is longer. Therefore, more lithium in the lithium plating layer directly participates in the transformation and reactions, and the lithium depletion speed is relatively high. Therefore, the improvement in terms of the Coulombic efficiency and number of cycles is more limited.

Among the above embodiments, Embodiment 1, Embodiment 2, and Embodiment 3 provide technical solutions achieving a significant effect in reducing micro-short-circuits of the battery caused by lithium dendrite punctures and improving the Coulombic efficiency, number of cycles, and self-discharge rate of the battery, and are preferred embodiments of this application. The above preferred embodiments are merely exemplary embodiments of this application, but not intended to limit this application.

**Table 1 Test results of comparative embodiment and different embodiments**

| Serial number | Overall volume ratio between negative and positive active materials | Type of pore channel | Width or diameter of pore channel (µm) | Spacing (µm) | Self-discharge (mV/h) | Average Coulombic efficiency | Number of cycles with capacity retention rate fading to 80% |
|---|---|---|---|---|---|---|---|
| Comparative Embodiment | 0.6 | / | / | / | 0.72 | 98.0% | 20 |
| Embodiment 1 | 0.6 | Lattice | 200 | 200 | 0.11 | 99.7% | 150 |
| Embodiment 2 | 0.6 | Stripe | 200 | 200 | 0.20 | 99.4% | 102 |
| Embodiments | 0.6 | Hole array | 200 | 200 | 0.15 | 99.6% | 135 |
| Embodiment 4 | 0.6 | Lattice | 40 | 40 | 0.34 | 99.0% | 62 |
| Embodiments | 0.6 | Lattice | 500 | 500 | 0.29 | 98.9% | 51 |
| Embodiment 6 | 0.6 | Lattice | 1000 | 1000 | 0.43 | 98.6% | 40 |
| Embodiment 7 | 0.6 | Lattice | 1200 | 1200 | 0.48 | 98.4% | 33 |

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A negative electrode plate (221), **characterized in that** the negative electrode plate comprises:
a negative current collector (2211) and a negative active material layer (2212) disposed on the negative current collector (2211), wherein
a plurality of pore channels (2213) are disposed in the negative active material layer (2212).

2. The negative electrode plate (221) according to claim 1, **characterized in that** the plurality of pore channels (2213) are evenly distributed in the negative active material layer (2212).

3. The negative electrode plate (221) according to claim 1 or 2, **characterized in that** a width W of each of the pore channels (2213) is 40 µm to 1000 µm.

4. The negative electrode plate (221) according to claim 3, **characterized in that** the width W of the pore channel (2213) is 100 µm to 300 µm.

5. The negative electrode plate (221) according to any one of claims 1 to 4, **characterized in that** a spacing L between adjacent pore channels (2213) is 40 µm to 500 µm.

6. The negative electrode plate (221) according to any one of claims 1 to 5, **characterized in that** the pore channels (2213) comprise first channels (2231a) extending along a first direction (x) and second channels (2231b) extending along a second direction (y), a plurality of first channels (2231a) and a plurality of second channels (223 1b) form a lattice structure, and the second direction (y) is perpendicular to the first direction (x).

7. The negative electrode plate (221) according to any one of claims 1 to 5, **characterized in that** each of the pore channels (2213) is a channel extending along a first direction (x), a plurality of the channels are arranged along a second direction (y) to form a striped structure, and the second direction (y) is perpendicular to the first direction (x).

8. The negative electrode plate (221) according to any one of claims 1 to 5, **characterized in that** the pore channels (2213) are holes, and a plurality of the holes form a hole array structure.

9. The negative electrode plate (221) according to any one of claims 1 to 8, **characterized in that** the pore channels (2213) are formed by a laser scribing process.

10. The negative electrode plate (221) according to any one of claims 1 to 9, **characterized in that** the negative active material layer (2212) comprises a negative active material, and a volume of the negative active material is less than a volume of a positive active material in a positive electrode plate (222) corresponding to the negative electrode plate (221).

11. The negative electrode plate (221) according to claim 10, **characterized in that** the volume of the negative active material is less than 80% of the volume of the positive active material.

12. The negative electrode plate (221) according to claim 10 or 11, **characterized in that** the volume of the negative active material in a first region not provided with the pore channels (2213) in the negative active material layer (2212) is greater than the volume of the positive active material in a region corresponding to the first region in the positive electrode plate (222).

13. The negative electrode plate (221) according to any one of claims 10 to 12, **characterized in that** the volume of the negative active material in each of the pore channels (2213) is less than the volume of the positive active material in a region corresponding to the pore channel (2213) in the positive electrode plate (222).

14. The negative electrode plate (221) according to claim 13, **characterized in that** the volume of the negative active material in each of the pore channels (2213) is less than 60% of the volume of the positive active material in the region corresponding to the pore channel (2213) in the positive electrode plate (222).

15. An electrode assembly (22), **characterized in that** the electrode assembly comprises:
the negative electrode plate (221) according to any one of claims 1 to 14;
a positive electrode plate (222), comprising a positive current collector and a positive active material disposed on the positive current collector; and
a separator (223), disposed between the negative electrode plate (221) and the positive electrode plate (222).

16. A battery cell (20), **characterized in that** the battery cell comprises the electrode assembly (22) according to claim 15.

17. A battery (10), **characterized in that** the battery comprises the battery cell (20) according to claim 16.

18. An electrical device, **characterized in that** the electrical device comprises the battery (10) according to claim 17, and the battery (10) is configured to provide electrical energy.
